# EUROPEAN PATENT APPLICATION

(11) **EP 4 657 535 A2**
(43) Date of publication of application: **03.12.2025**
(21) Application number: 25170057.1
(22) Date of filing: 11.04.2025
(51) Int. Cl.: H01M 4/04

(54) **APPARATUS AND METHOD FOR ROLLING ELECTRODE PLATE**

(30) Priority: 29.05.2024 KR 20240070334
(71) Applicant: SAMSUNG SDI CO., LTD., Yongin-si, Gyeonggi-do 17084 (KR)
(72) Inventor: MOON, Dongwon, 17084 Yongin-si (KR); SON, Suemi, 17084 Yongin-si (KR)
(74) Representative: Marks & Clerk LLP

(57) **Abstract**

An apparatus for rolling an electrode plate, includes: a main rolling portion including a first rolling portion and a second rolling portion; an adjustment roller portion to be moved up and down and contact one surface of an electrode plate that has passed between the first rolling portion and the second rolling portion, the electrode plate including: a substrate; an active material coating portion on the substrate, the active material coating portion including an active material applied in a plurality of rows on the substrate; and a plurality of uncoated portions corresponding to areas of the substrate where the active material is not applied; and a plurality of pressing portions configured to press the plurality of uncoated portions, and located at a rear end of the main rolling portion with respect to a transfer direction of the electrode plate.

## Description

### BACKGROUND

### 1. Field

Aspects of embodiments of the present disclosure relate to an apparatus and method for rolling an electrode plate.

### 2. Description of Related Art

An electrode plate process for manufacturing battery electrode plates may be performed in the order of a mixing process, a coating process, a press process, and a slitting process. The press process may be a process of compressing a mixture including an active material, a conductive material, and a binder, so that the mixture is well attached to a substrate of an electrode plate. The electrode plate manufactured through the mixing process and the coating process may include an active material coating portion applied in a plurality of rows on a substrate, and a plurality of uncoated portions, which are areas in which the active material coating portion is not applied to the substrate.

When rolling the electrode plate in the press process of coating the substrate with a mixture and then performing drying and rolling thereon, wrinkles may occur in the uncoated portions due to a difference in elongation between the coating portions and the uncoated portions. The uncoated portions are the portions where the lead tab is connected. If wrinkles are formed, the quality of the electrode may deteriorate.

The above information disclosed in this Background section is for enhancement of understanding of the background of the present disclosure, and therefore, it may contain information that does not constitute related (or prior) art.

### SUMMARY

Embodiments of the present disclosure may be directed to an apparatus and method for rolling an electrode plate, in which the formation of wrinkles may be prevented, reduced, or removed.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to one or more embodiments of the present disclosure, an apparatus for rolling an electrode plate, includes: a main rolling portion including a first rolling portion and a second rolling portion; an adjustment roller portion configured to be moved up and down and contact one surface of an electrode plate that has passed between the first rolling portion and the second rolling portion, the electrode plate including: a substrate; an active material coating portion on the substrate, the active material coating portion including an active material applied in a plurality of rows on the substrate; and a plurality of uncoated portions corresponding to areas of the substrate where the active material is not applied; and a plurality of pressing portions configured to press the plurality of uncoated portions, and located at a rear end of the main rolling portion with respect to a transfer direction of the electrode plate.

In some embodiments, the adjustment roller portion may be configured to be moved up and down to adjust an unloading angle of the electrode plate that has passed between the first rolling portion and the second rolling portion in a range greater than or equal to 10° and less than or equal to 90°.

In some embodiments, the pressing portions may be located between the main rolling portion and the adjustment roller portion, and/or at a rear end of the adjustment roller portion with respect to the transfer direction of the electrode plate.

In some embodiments, the plurality of pressing portions may include one or more pressing portions located in each of the areas corresponding to the plurality of uncoated portions.

In some embodiments, a surface configured to contact the electrode plate of each of the pressing portions may have a curved shape.

In some embodiments, each of the pressing portions may be configured to be moved up and down via a cylinder and an arm or arms.

In some embodiments, the cylinder and the arm may be configured to adjust left and right angles of a corresponding pressing portion of the pressing portions.

In some embodiments, the apparatus may further include a sensor configured to measure a pressure applied to a contact surface of the electrode plate, each of the pressing portions being configured to contact the contact surface.

In some embodiments, the apparatus may further include a first controller configured to adjust a vertical movement of each of the pressing portions according to the pressure measured by the sensor.

In some embodiments, the apparatus may further include a visual inspection portion located between the main rolling portion and a pressing portion located between the main rolling portion and the adjustment roller portion from among the pressing portions. The visual inspection portion may be configured to inspect the electrode plate that has passed between the first rolling portion and the second rolling portion.

In some embodiments, the visual inspection portion may be configured to identify a wrinkle occurrence position of one or more uncoated portions from among the plurality of uncoated portions.

In some embodiments, the apparatus may further include a second controller configured to adjust left and right angles of the pressing portion to cause the pressing portion to press the wrinkle occurrence position of the one or more uncoated portions.

In some embodiments, the second controller may be configured to selectively operate at least one pressing portion from among the pressing portions to cause the at least one pressing portion to press one or more uncoated portions at the wrinkle occurrence position identified by the visual inspection portion from among the plurality of uncoated portions.

According to one or more embodiments of the present disclosure, a method for rolling an electrode plate, includes: capturing an image of an electrode plate that has passed between a first rolling portion and a second rolling portion, the electrode plate including: a substrate; an active material coating portion on the substrate, the active material coating portion comprising an active material applied in a plurality of rows on the substrate; and a plurality of uncoated portions corresponding to areas of the substrate where the active material is not applied on the substrate; identifying a wrinkle occurrence position in an uncoated portion from among the plurality of uncoated portions using the captured image; and controlling operations of a plurality of pressing portions to press at least one uncoated portion of the plurality of uncoated portions based on the identified wrinkle occurrence position.

In some embodiments, the controlling of the operations of the pressing portions may include adjusting left and right angles of a pressing portion from among the pressing portions based on the identified wrinkle occurrence position.

In some embodiments, the controlling of the operations of the pressing portions may include operating one or more pressing portions from among the pressing portions to press the at least one uncoated portion at the identified wrinkle occurrence position.

In some embodiments, the method may further include measuring a pressure applied to a contact surface between the electrode plate and each of the pressing portions.

In some embodiments, the method may further include adjusting a vertical movement of one or more pressing portions from among the pressing portions according to the measured pressure.

In some embodiments, the method may further include controlling an unloading angle of the electrode plate that has passed between the first rolling portion and the second rolling portion by controlling a vertical movement of an adjustment roller portion based on the identified wrinkle occurrence position.

In some embodiments, a surface of each of the pressing portions configured to contact the electrode plate may have a curved shape.

According to some embodiments of the present disclosure, the quality and/or safety of battery cells may be improved by removing wrinkles in uncoated portions that may occur during a rolling process using an apparatus and method for rolling the electrode plate.

According to some embodiments of the present disclosure, unnecessary power waste of an apparatus for rolling the electrode plate may be reduced by selectively operating at least some of a plurality of pressing portions for pressing the uncoated portions of an electrode plate.

However, aspects and features of the present disclosure are not limited to those described above, and other aspects and features not mentioned will be clearly understood by a person skilled in the art from the detailed description, described below.

At least some of the above and other features of the invention are set out in the claims.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings.
FIG. 1 illustrates a perspective view of an apparatus for rolling an electrode plate according to some embodiments of the present disclosure.
FIG. 2 illustrates a schematic operation of an adjustment roller portion of the apparatus for rolling the electrode plate according to some embodiments of the present disclosure.
FIG. 3 illustrates a pressing portion and an electrode plate rolled by the apparatus for rolling the electrode plate according to some embodiments of the present disclosure.
FIG. 4 illustrates the electrode plate and the pressing portion of FIG. 3 when viewed from a vertical cross-sectional direction.
FIG. 5 illustrates a structure of the pressing portion according to some embodiments of the present disclosure.
FIG. 6 illustrates a schematic operation of the pressing portion of FIG. 5.
FIG. 7 illustrates a schematic diagram showing positions of a visual inspection portion, a pressing portion, and an adjustment roller portion of the apparatus for rolling the electrode plate according to some embodiments of the present disclosure.
FIG. 8 illustrates a schematic diagram further showing a controller and a sensor to the apparatus for rolling the electrode plate in FIG. 7.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the related requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

As used in the present disclosure, the phrase "each of a plurality" may refer to each of all the components included in the plurality, or may refer to each of some of the components included in the plurality. For example, each of the pressing portions may refer to each of all of the pressing portions, or may refer to each of some of the pressing portions.

The terms used in the present specification are for ease of describing the embodiments of the present disclosure, and are not intended to be limiting.

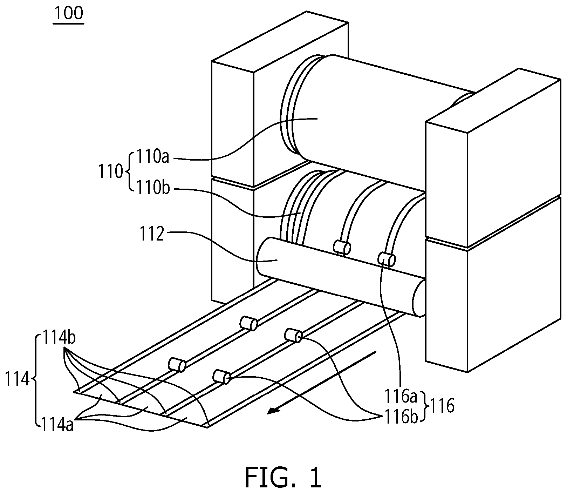

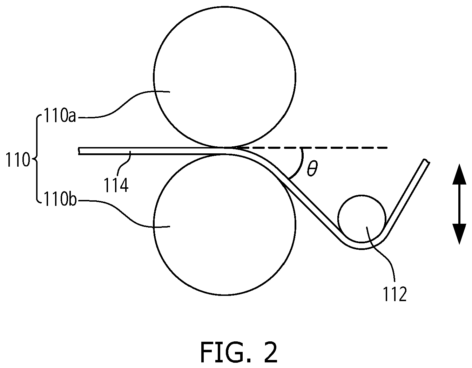

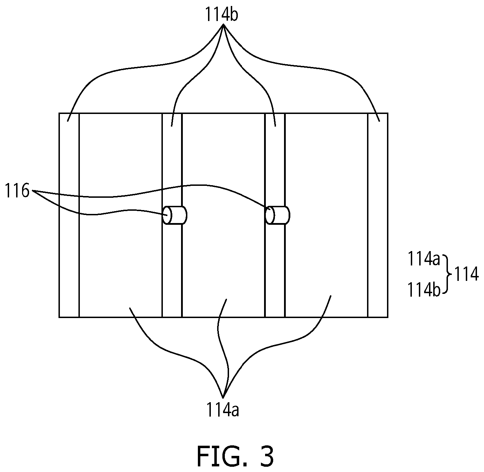

FIG. 1 illustrates a perspective view of an apparatus 100 for rolling an electrode plate 114 according to some embodiments of the present disclosure. FIG. 2 illustrates a schematic operation of an adjustment roller portion 112 of the apparatus 100 for rolling the electrode plate 114 according to some embodiments of the present disclosure. FIG. 3 illustrates a pressing portion 116 and an electrode plate 114 rolled by the apparatus 100 for rolling the electrode plate 114 according to some embodiments of the present disclosure.

A battery may include an electrode assembly, a case accommodating the electrode assembly and an electrolyte therein, and a cap assembly joined to (e.g., connected to or attached to) an opening (e.g., an opened end) of the case to seal the case. In addition, the electrode assembly may include a separator, and a first electrode and a second electrode positioned with the separator therebetween, which may be formed by being wound in a jelly-roll form or sequentially stacked in a stack form. The first electrode may include a first substrate, and a first active material coating portion 114a positioned on the first substrate. A first lead tab may extend outward from a first uncoated portion 114b of the first substrate where the first active material coating portion 114a is not positioned, and the first lead tab may be electrically connected to the cap assembly.

The second electrode may include a second substrate, and a second active material coating portion 114a positioned on the second substrate. A second lead tab may extend outward from a second uncoated portion 114b of the second substrate where the second active material coating portion 114a is not positioned, and the second lead tab may be electrically connected to the case. The first lead tab and the second lead tab may extend in opposite directions from each other.

The first electrode may function as a positive electrode. In this case, the first substrate may include (e.g., may be composed of), for example, an aluminum foil, and the first active material coating portion 114a may include, for example, a transition metal oxide. The second electrode may function as a negative electrode. In this case, the second substrate may include (e.g., may be composed of), for example, a copper foil or a nickel foil, and the second active material coating portion 114a may include, for example, graphite.

An electrode plate process may be performed to manufacture the first electrode or the second electrode of the battery as described above. The electrode plate process may be generally divided into a mixing process, a coating process, a press process, and a slitting process. In the mixing process, a mixture of the active material coating portion 114a applied to a metal substrate may be formed. The mixture may be prepared by mixing a conductive material and a binder with an active material that improves the electrical performance of the electrode. In the coating process, the mixture may be coated on an aluminum plate that may serve as a substrate of a positive electrode, or may be coated on a copper plate that may serve as a substrate of a negative electrode.

The electrode plate before the slitting process, which is manufactured through the mixing process and the coating process, may include the active material coating portion 114a applied in a plurality of rows on the substrate, and a plurality of the uncoated portions 114b, which are areas where the active material coating portion 114a is not applied on the substrate.

The press process may be a process of controlling a thickness of the electrode plate in the form of a roll or a reel by passing the electrode plate between rolling rolls managed at a constant or substantially constant pressure and gap, and compressing the mixture so as to be suitably attached (e.g., well attached) to the electrode substrate. By reducing the thickness of the substrate, a density of the electrode and an adhesion between the substrate and the mixture may be increased, thereby facilitating the entry and exit of ions. However, in a case where the electrode plate 114 is rolled with a cylindrical main rolling portion 110, wrinkles may occur in the uncoated portion 114b due to a difference in elongation between the active material coating portion 114a and the uncoated portion 114b.

Because wrinkles in the uncoated portion 114b may affect the quality and safety of battery cells, an apparatus 100 for rolling an electrode plate and a rolling method using the same may be provided to remove wrinkles.

The apparatus 100 for rolling the electrode plate 114 according to some embodiments of the present disclosure may include a main rolling portion 110 including a first rolling portion 110a and a second rolling portion 110b. The first rolling portion 110a and the second rolling portion 110b may be spaced apart from each other by a gap that allows the electrode plate 114 to pass therebetween. Each of the first rolling portion 110a and the second rolling portion 110b may be in the form of a roller. The first rolling portion 110a and the second rolling portion 110b may apply a pressure to the electrode plate 114, while rotating as the electrode plate 114 is transferred. In order to remove wrinkles on the uncoated portion 114b that may occur in a case of pressing the electrode plate 114 through the main rolling portion 110, the apparatus 100 for rolling the electrode plate 114 may further include an adjustment roller portion 112 that adjusts the unloading angle Θ of the electrode plate 114 passing between the first rolling portion 110a and the second rolling portion 110b, and a plurality of pressing portions 116, e.g. 116a, 116b, that press the uncoated portions 114b.

The electrode plate 114 illustrated in FIG. 3 is an electrode plate, for example, before slitting to fit a desired electrode size of the battery cell, and may include the active material coating portion 114a, which is an area where an active material (e.g., a mixture) is applied on an electrode substrate, and the uncoated portion 114b, which is the uncoated area. In more detail, the active material coating portion 114a, in which the active material is applied in a plurality of rows on the substrate, and the uncoated portions 114b, which are the areas where the active material is not applied on the substrate, may be included in the electrode plate 114. As illustrated in FIG. 3, the uncoated portions 114b may be formed between the active material coating portions 114a and on the outermost sides of the substrate.

The pressing portions 116 may have a cylindrical shape that presses the uncoated portion 114b including a plurality of rows. For example, the pressing portions 116 may have a cylindrical shape having a height equal to or substantially equal to a width of the uncoated portion 114b. As illustrated in FIG. 3, one pressing portion 116 may be disposed in each area forming the uncoated portions 114b. In other embodiments, two or more pressing portions 116 may be disposed in each area forming the uncoated portions 114b, so that wrinkles that may be formed on each of the uncoated portions 114b may be repeatedly removed.

Referring to FIG. 2, when the apparatus 100 for rolling the electrode plate in FIG. 1 is viewed from a vertical cross-sectional direction of the main rolling portion 110, the adjustment roller portion 112 may move up and down along the direction of the arrow shown in FIG. 2. As the adjustment roller portion 112 moves up and down, an acute angle formed by an extension line of the electrode plate 114 that passes between the first rolling portion 110a and the second rolling portion 110b and an extension line of the electrode plate 114 before passing therebetween may be referred to as an unloading angle Θ of the electrode plate. The adjustment roller portion 112 may come into contact with one surface of the electrode plate 114 that passes between the first rolling portion 110a and the second rolling portion 110b. The one surface of the electrode plate 114 may be the upper surface or the lower surface of the electrode plate 114.

As illustrated in FIG. 2, in a case where the adjustment roller portion 112 comes into contact with the upper surface of the electrode plate 114, the adjustment roller portion 112 may be operated by pressing or releasing power from above. In other embodiments, the adjustment roller portion 112 may come into contact with the lower surface of the electrode plate 114. In this case, the adjustment roller portion 112 may be operated by upwardly pushing or releasing power.

The path of the electrode plate 114 is not limited to that illustrated in FIG. 2, and may be variously modified depending on the position of the adjustment roller portion 112, as described above. In other embodiments, the unloading angle Θ of the electrode plate 114 may be variously modified depending on the vertical movement of the electrode plate 114. For example, the unloading angle Θ of the apparatus 100 for rolling the electrode plate 114 may be variously adjusted to any one of 10° to 90° as needed or desired according to the vertical movement of the adjustment roller portion 112.

As illustrated in FIG. 1, each of the pressing portions 116 that press the uncoated portions 114b may be positioned between the main rolling portion 110 and the adjustment roller portion 112, and/or at the rear end of the adjustment roller portion 112 with respect to the transfer direction of the electrode plate 114.

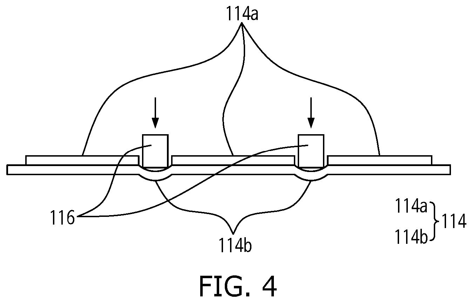

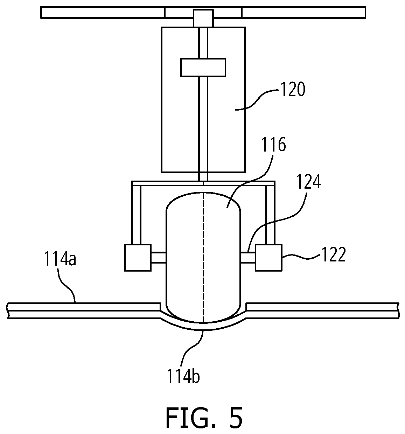

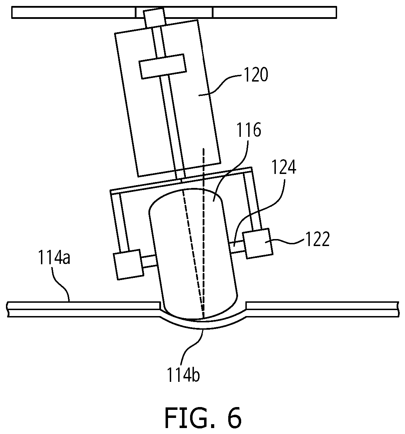

FIG. 4 illustrates the electrode plate 114 and the pressing portion 116 of FIG. 3 when viewed from the vertical cross-sectional direction. FIG. 5 illustrates a structure of the pressing portion 116 according to some embodiments of the present disclosure. FIG. 6 illustrates a schematic operation of the pressing portion of FIG. 5.

FIG. 4 illustrates the pressing portions 116 when viewed from the vertical cross-sectional direction, in a case where the pressing portions 116 each have a cylindrical shape. For example, the pressing portions 116 may each have a rectangular cross-section. As illustrated in FIGS. 5 and 6, a surface of each of the pressing portions 116 that comes into contact with the electrode plate 114 may have a curved shape. For example, in a case where the contact surface has a curved shape, the shape of the pressing portion 116 when viewed from the vertical cross-section may be a rectangular shape with swollen upper and lower surfaces. As illustrated in FIGS. 5 and 6, in a case where the upper and lower surfaces of the rectangular shape are swollen, the pressure of the protrusion may be greater with respect to the contact surface, and the pressure position with respect to the contact surface may be more finely adjusted, when compared to a case of the rectangular shape as illustrated in FIG. 4.

According to some embodiments, each of the pressing portions 116 may move up and down via a cylinder 120 and an arm 122 or arms 122, as illustrated in FIG. 5. Additionally or as another example, as illustrated in FIG. 6, each of the pressing portions 116 may allow left and right angle adjustments via the cylinder 120 and the arms 122.

As illustrated in FIG. 5, the arms 122 may be disposed at opposite ends of a roll member 124 disposed on a roller shaft of the pressing portion 116. The arms 122 may be connected to the upper cylinder 120 via a connecting member. The upper cylinder 120 may have an elongated cylindrical shape, and a piston device may be disposed inside the upper cylinder 120 so that the pressing portion 116 may move up and down by a piston movement. As the pressing portion 116 moves up and down, the pressure on the contact surface with the electrode plate 114 may be adjusted, and wrinkles in the uncoated portion 114b may be removed in a case where the pressure increases. The upper cylinder 120 and the arms 122 for moving the pressing portion described above with reference to FIGS. 5 and 6 are illustrated as examples, and any suitable device connected to the pressing portion 116 to cause the pressing portion 116 to move up and down may be used. Further, while the sizes of the cylinder 120 and the arms 122 are schematically shown for convenience of illustration, it should be understood that the actual sizes of the cylinder 120 and the arms 122 may be different.

The pressing portion 116 described above with reference to FIG. 6 may correspond to the pressing portion 116 described above with reference to FIG. 5 that is tilted to the left via the cylinder 120 and the arms 122. The upper end of the cylinder 120 connected to the arms 122 attached to the roll member 124 of the pressing portion 116 may move left and right, and may tilt the pressing portion 116 to the left or right. For example, as illustrated in FIG. 6, in a case where the upper end of the cylinder 120 is moved to the left, the central axis of the cylinder 120 and the pressing portion 116 may be tilted to the left from the normal to the electrode plate 114. Accordingly, the left side of the uncoated portion 114b that is in contact with the lower surface of the pressing portion 116 may be targeted and pressed, and wrinkles in the corresponding area may be removed.

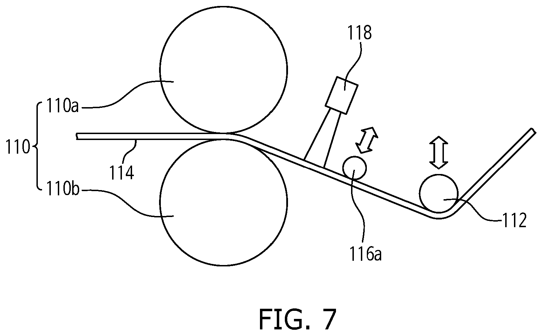

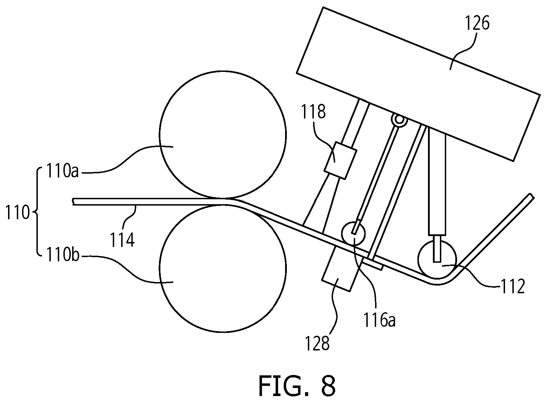

FIG. 7 illustrates a schematic diagram showing positions of a visual inspection portion 118, a pressing portion 116a, and an adjustment roller portion 112 of the apparatus 100 for rolling the electrode plate 114 according to some embodiments of the present disclosure. FIG. 8 illustrates a schematic diagram further showing a controller and a sensor 128 of the apparatus 100 for rolling the electrode plate 114 in FIG. 7.

Referring to FIG. 7, the visual inspection portion 118 may be disposed positioned between a main rolling portion 110 and a pressing portion 116a, which is disposed between the main rolling portion 110 and an adjustment roller portion 112. Additionally or as another example, the visual inspection portion 118 may be disposed between the pressing portion 116a and the adjustment roller portion 112. As such, wrinkles that have not been removed or wrinkles that have reappeared may be identified, even after the electrode plate 114 passes through the pressing portion 116a.

The visual inspection portion 118 may inspect a wrinkle occurrence position in order to remove wrinkles that may be generated on the electrode plate 114 rolled by the main rolling portion 110. For example, the visual inspection portion 118 may include an image sensor (e.g., a camera) that captures at least a portion of the electrode plate 114 that has passed through the main rolling portion 110. In some embodiments, the visual inspection portion 118 may include an analysis module (e.g., an analysis circuit or processor) that identifies the position of the wrinkles in the electrode plate 114 by analyzing an image captured by the image sensor.

In some embodiments, the visual inspection portion 118 may identify a wrinkle occurrence position of one or more uncoated portions 114b from among the uncoated portions 114b.

Referring to FIG. 8, the apparatus 100 for rolling the electrode plate 114 may further include a sensor 128 to measure a pressure applied to the contact surface of the electrode plate 114 on which the pressing portions 116 are disposed. For convenience of illustration, FIG. 8 illustrates one pressing portion 116a between the main rolling portion 110 and the adjustment roller portion 112 with respect to the transfer direction of the electrode plate 114, but the present disclosure is not limited thereto, and an additional adjustment roller portion 112 may be disposed at a rear end of pressing portion 116b (see e.g. FIG 1). In other embodiments, three or more pressing portions 116 that press each of the uncoated portions 114b may be disposed. The pressure in a case where wrinkles occur in a specific uncoated portion 114b from among the uncoated portions 114b may be relatively lower than the pressure in a case where wrinkles do not occur.

As illustrated in FIG. 8, a first controller and a second controller may be disposed on a support portion 126 that fixes the visual inspection portion 118, the cylinder connected to the pressing portion 116, and the adjustment roller portion 112. Additionally or as another example, the first controller and/or the second controller may be disposed in any area capable of wired or wireless communication with the visual inspection portion 118, the pressing portion 116, and/or the adjustment roller portion 112. For example, the first controller and/or the second controller may be disposed in any suitable internal area of the apparatus 100 for rolling the electrode plate 114, or outside of the apparatus 100 for rolling the electrode plate, to control the visual inspection portion 118, the pressing portion 116, and/or the adjustment roller portion 112.

The first controller may adjust the vertical movement of each of the pressing portions 116 based on a pressure value result from the sensor 128 that measures the pressure applied to the uncoated portion 114b on the lower surface of the pressing portion 116. For example, in a case where the sensor 128 that measures the pressure calculates a relatively low pressure result, the possibility of an occurrence of wrinkles may be high. Accordingly, the first controller may control the pressing portion 116 on the corresponding uncoated portion 114b to move in a direction of pressing the electrode plate 114, or in other words, in a downward direction.

In some embodiments, the second controller may adjust the left and right angles of the pressing portion 116, so that the pressing portion 116 presses the wrinkle occurrence position of one or more uncoated portions 114b in response to the result value of the visual inspection portion 118 that identifies the wrinkle occurrence position of the uncoated portion 114b based on the captured image result. For example, in a case where it is determined that the entire width direction of the specific uncoated portion 114b is a wrinkle occurrence position, the upper portion of the cylinder 120 of the pressing portion 116 may be adjusted to be perpendicular to or substantially perpendicular to the electrode plate 114, so as to evenly press the entire specific uncoated portion 114b. As another example, in a case where it is determined that a certain area within the specific uncoated portion 114b is a wrinkle occurrence position, the shaft of the pressing portion 116 may be tilted so that the corresponding partial area may be further pressed.

According to some embodiments, the second controller may selectively operate at least one pressing portion from among the pressing portions 116, so as to press one or more uncoated portions 114b at the wrinkle occurrence position identified by the visual inspection portion 118. In this case, a plurality of pressing portions 116 to which a plurality of cylinders 120 are connected may be included in the apparatus 100 for rolling the electrode plate. As such, unnecessary power waste of the apparatus 100 for rolling the electrode plate may be reduced by selectively operating the pressing portions 116.

In some embodiments, the method for rolling the electrode plate may include capturing an image of the electrode plate 114 that has passed between the first rolling portion 110a and the second rolling portion 110b, identifying a wrinkle occurrence position of an uncoated portion 114b using the captured image, and controlling the operation of the pressing portions 116 that press the uncoated portions 114b based on the identified wrinkle occurrence position. For example, in a case where an image indicating that wrinkles have occurred in a specific uncoated portion 114b from among the uncoated portions 114b has been identified and determined by the visual inspection portion 118, the method for rolling the electrode plate may include operating only the pressing portion 116 that presses the corresponding uncoated portion 114b.

In some embodiments, in a case where it is determined that wrinkles have occurred in a specific region of the specific uncoated portion 114b based on the image captured by the visual inspection portion 118, the method for rolling the electrode plate may further include adjusting the left and right angles of the pressing portion 116, so that the corresponding uncoated portion 114b may receive greater pressure at the contact surface with the pressing portion 116.

Additionally or as another example, the pressure change may be offset by adjusting the vertical movement of one or more of the pressing portions 116 according to the pressure measured by the pressure measurement sensor 128. For example, in a case where the pressure on the specific uncoated portion 114b is measured to be relatively low by the sensor 128, the pressure may be increased by moving the pressing portion 116 in contact with the corresponding uncoated portion 114b downward using the cylinder 120 and the arms 122. In some embodiments, in a case where the pressure on the specific uncoated portion 114b is measured to be relatively high by the sensor 128, the pressure may be lowered by moving the pressing portion 116 in contact with the corresponding uncoated portion 114b upward via the cylinder 120 and the arms 122. For example, in a case where the pressure of the contact surface is higher or lower than average, wrinkles may occur in the uncoated portion 114b.

In some embodiments, the pressure measurement sensor 128 may measure the pressure of the biased portion within one uncoated portion 114b indicating that the pressure is relatively low. In this case, the left and right angles of the pressing portion 116 may be adjusted by moving the upper end of the cylinder 120 connected to the pressing portion 116, so that the pressing portion 116 may be controlled to move toward an area where the pressure is relatively low. The control according to the pressure measurement result may be performed by the first controller and/or the second controller.

In addition, the method for rolling the electrode plate may further include selectively operating one or more pressing portions 116 to press the uncoated portion 114b at the wrinkle occurrence position identified by the visual inspection portion 118 from among the pressing portions 116 that press the uncoated portions 114b.

In some embodiments, the method for rolling the electrode plate may further include controlling the unloading angle Θ of the electrode plate 114 that has passed between the first rolling portion 110a and the second rolling portion 110b by controlling the vertical movement of the adjustment roller portion 112 based on the wrinkle occurrence position identified by the visual inspection portion 118.

For example, in a case where the occurrence of wrinkles in the specific uncoated portion 114b of the electrode plate 114 that has passed through the main rolling portion 110 is identified, the adjustment roller portion 112 in contact with the upper surface of the electrode plate 114 may be controlled to move downward, thereby increasing the unloading angle Θ. In this case, the inclination of the electrode plate 114 between the main rolling portion 110 and the adjustment roller portion 112 with respect to the transfer direction may be increased, and thus, wrinkles in the corresponding uncoated portion 114b may be removed. The adjustment of the vertical movement of the adjustment roller portion 112 according to the image result of the visual inspection portion 118 may be performed by a separate controller.

The quality and safety of a final battery cell may be improved by effectively removing wrinkles in the uncoated portion 114b in a case where the rolling process of manufacturing the electrode plate is performed through the apparatus 100 for rolling the electrode plate and the rolling method according to some embodiments of the present disclosure.

The electronic or electric devices and/or any other relevant devices or components according to embodiments of the present disclosure described herein (e.g., the analysis module, the first controller, the second controller, the separate controller, and the like) may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

Although the present disclosure has been described above with respect to embodiments thereof, the present disclosure is not limited thereto. Various modifications and variations can be made thereto by those skilled in the art within the present disclosure and the equivalent scope of the appended claims.

### DESCRIPTION OF SOME REFERENCE SYMBOLS

100: apparatus for rolling electrode plate
110: main rolling portion
110a: first rolling portion
110b: second rolling portion
112: adjustment roller portion
114: electrode plate
114a: active material coating portion
114b: uncoated portion
116: pressing portion
116a: pressing portion between main rolling portion and adjustment roller portion
116b: pressing portion at rear end of adjustment roller portion
118: visual inspection portion
120: cylinder
122: arm
124: roll member
126: support portion
128: sensor

## Claims

1. An apparatus (100) for rolling an electrode plate (114), the apparatus (100) comprising:
a main rolling portion (110) comprising a first rolling portion (110a) and a second rolling portion (110b);
an adjustment roller portion (112) configured to be moved up and down and contact one surface of the electrode plate (114) that has passed between the first rolling portion (110a) and the second rolling portion (110b), the electrode plate (114) comprising:
a substrate;
an active material coating portion (114a) on the substrate, the active material coating portion (114a) comprising an active material applied in a plurality of rows on the substrate; and
a plurality of uncoated portions (114b) corresponding to areas of the substrate where the active material is not applied; and
a plurality of pressing portions (116) configured to press the plurality of uncoated portions (114b), and located at a rear end of the main rolling portion (110) with respect to a transfer direction of the electrode plate (114).

2. The apparatus (100) as claimed in claim 1, wherein the adjustment roller portion (112) is configured to be moved up and down to adjust an unloading angle (Θ) of the electrode plate (114) that has passed between the first rolling portion (110a) and the second rolling portion (110b) in a range greater than or equal to 10° and less than or equal to 90°.

3. The apparatus (100) as claimed in claim 1 or 2, wherein the pressing portions (116) are located between the main rolling portion (110) and the adjustment roller portion (112), and/or at a rear end of the adjustment roller portion (112) with respect to the transfer direction of the electrode plate (114).

4. The apparatus (100) as claimed in claim 1, 2 or 3, wherein the plurality of pressing portions (116) comprises one or more pressing portions located in each of the areas corresponding to the plurality of uncoated portions (114b).

5. The apparatus (100) as claimed in any preceding claim, wherein each of the pressing portions (116) comprises a surface configured to contact the electrode plate (114), and wherein the surface configured to contact the electrode plate (114) has a curved shape.

6. The apparatus (100) as claimed in any preceding claim, wherein each of the pressing portions (116) is configured to be moved up and down via a cylinder (120) and an arm or arms (122).

7. The apparatus (100) as claimed in claim 6, wherein the cylinder (120) and the arm or arms (122) are configured to adjust left and right angles of a corresponding pressing portion (116) of the pressing portions (116).

8. The apparatus (100) as claimed in any preceding claim, further comprising a sensor (128) configured to measure a pressure applied to a contact surface of the electrode plate (114), each of the pressing portions (116) being configured to contact the contact surface.

9. The apparatus (100) as claimed in claim 8, further comprising a first controller configured to adjust a vertical movement of each of the pressing portions (116) according to the pressure measured by the sensor (128).

10. The apparatus (100) as claimed in any preceding claim, further comprising a visual inspection portion (118) located between the main rolling portion (110) and a pressing portion (116a) from among the pressing portions (116) which is located between the main rolling portion (110) and the adjustment roller portion (112),
wherein the visual inspection portion (118) is configured to inspect the electrode plate (114) that has passed between the first rolling portion (110a) and the second rolling portion (110b).

11. The apparatus (100) as claimed in claim 10, wherein the visual inspection portion (118) is configured to identify a wrinkle occurrence position of one or more uncoated portions (114b) from among the plurality of uncoated portions (114b).

12. The apparatus (100) as claimed in claim 11, further comprising a second controller configured to adjust left and right angles of the pressing portion (116) to cause the pressing portion (116) to press the wrinkle occurrence position of the one or more uncoated portions (114b).

13. The apparatus (100) as claimed in claim 12, wherein the second controller is configured to selectively operate at least one pressing portion (116) from among the pressing portions (116) to cause the at least one pressing portion (116) to press one or more uncoated portions (114b) at the wrinkle occurrence position identified by the visual inspection portion (118) from among the plurality of uncoated portions (114b).

14. A method for rolling an electrode plate (114), the method comprising:
capturing an image of an electrode plate (114) that has passed between a first rolling portion (110a) and a second rolling portion (110b), the electrode plate (114) comprising:
a substrate;
an active material coating portion (114a) on the substrate, the active material coating portion (114a) comprising an active material applied in a plurality of rows on the substrate; and
a plurality of uncoated portions (114b) corresponding to areas of the substrate where the active material is not applied on the substrate;
identifying a wrinkle occurrence position in an uncoated portion (114b) from among the plurality of uncoated portions (114b) via the captured image; and
controlling operations of a plurality of pressing portions (116) to press at least one uncoated portion of the plurality of uncoated portions (114b) based on the identified wrinkle occurrence position.

15. The method as claimed in claim 14, further comprising controlling an unloading angle (Θ) of the electrode plate (114) that has passed between the first rolling portion (110a) and the second rolling portion (110b) by controlling a vertical movement of an adjustment roller portion (112) based on the identified wrinkle occurrence position.
